(19) Europäisches Patentamt European Patent Office Office européen des brevets

(11) **EP 3 396 400 B1**

(12) **EUROPEAN PATENT SPECIFICATION**

(45) Date of publication and mention of the grant of the patent:
**11.11.2020 Bulletin 2020/46**

(51) Int Cl.:
***G01S 5/02*** *(2010.01)*

(21) Application number: **18169445.6**

(22) Date of filing: **26.04.2018**

(54) **A SYSTEM AND METHOD FOR CLUSTERING WI-FI FINGERPRINTS FOR INDOOR-OUTDOOR DETECTION**

SYSTEM UND VERFAHREN ZUM CLUSTERN VON WI-FI-FINGERABDRÜCKEN ZUR INNENBEREICH-AUSSENBEREICH-DETEKTION

SYSTÈME ET PROCÉDÉ PERMETTANT DE REGROUPER DES EMPREINTES DIGITALES WI-FI POUR DÉTECTION INTÉRIEUR-EXTÉRIEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2017 IL 25196717**

(43) Date of publication of application:
**31.10.2018 Bulletin 2018/44**

(73) Proprietor: **Deutsche Telekom AG**
**53113 Bonn (DE)**

(72) Inventors:
• **Shapira, Bracha**
**8472811 Beer Sheva (IL)**
• **Rokach, Lior**
**8496500 Omer (IL)**
• **Chizi, Barak**
**1150 Woluwe Saint Pierre (BE)**
• **Shtar, Guy**
**7412702 Ness Ziona (IL)**

(74) Representative: **Vossius & Partner**
**Patentanwälte Rechtsanwälte mbB**
**Siebertstrasse 3**
**81675 München (DE)**

(56) References cited:
**EP-A2- 3 404 438      US-A1- 2015 005 015**

• **RAY AVIK ET AL: "Localization of LTE measurement records with missing information", IEEE INFOCOM 2016 - THE 35TH ANNUAL IEEE INTERNATIONAL CONFERENCE ON COMPUTER COMMUNICATIONS, IEEE, 10 April 2016 (2016-04-10), pages 1-9, XP032930002, DOI: 10.1109/INFOCOM.2016.7524370 [retrieved on 2016-07-27]**
• **JIANG ZHIPING ET AL: "Wi-Fi Fingerprint Based Indoor Localization without Indoor Space Measurement", 2013 IEEE 10TH INTERNATIONAL CONFERENCE ON MOBILE AD-HOC AND SENSOR SYSTEMS, IEEE, 14 October 2013 (2013-10-14), pages 384-392, XP032530134, DOI: 10.1109/MASS.2013.84 [retrieved on 2013-12-09]**

## Description

### Field of the Invention

The present invention relates to the field of indoor mapping. More particularly, the invention relates to a system and method for detecting the indoor and outdoor location of a mobile device user.

### Background of the invention

Mobile devices contain numerous sensors, allowing an accurate determination of a user's location. Detecting location is a key component of ubiquitous computing systems and allows context aware applications. Using such application, relevant information and services can be delivered to a user. Using location, today's applications allow users to find a nearby restaurant, provide directions to somewhere, allow rescue teams to reach a correct right place, and even allow a user to order a taxi.

Indoor positioning systems remain a substantial technological challenge. Moreover, Indoor Positioning Systems (IPS) and Global Navigation Satellite System (GNSS) rely on various sensors. It is difficult to determine which sensors are most suitable to be used at a given time. Knowing if a user is indoors or not can prevent activation of useless sensors (e.g. indoor activation of GPS), and can allow algorithms to make wise decisions.

Several approaches have been proposed for indoor-outdoor recognition. A leading approach aims at Wi-Fi based indoor positioning. Most of the techniques that are based on Wi-Fi Access Points (APs) require an AP database which holds a coordinate for each of the Wi-Fi APs. In most cases an AP that is not part of the database does not change the result.

Some of the approaches utilize RF signals (such as RFID signals) and ultrasonic signals for indoor positioning. These methods however require installation of additional hardware on each site in addition to creating an AP database, which requires a site survey. Another approach aims at classifying logical locations utilizing optical, acoustical and motion sensors. These methods can also be utilized for indoor-outdoor recognition.

Another approach uses the GPS receiver and other sensors of a mobile device to detect indoor-outdoor location of a user. These approaches, however lack accuracy and are high power consuming.

Another approach utilizes Wi-Fi fingerprints density-based clustering and motion based clustering for indoor positioning and mapping. This approach clusters Wi-Fi fingerprints using k-means and creates defined indoor environments and detects the location of a user therein. The major drawback of this approach is the need of a building plan to which the detected fingerprints are related. A building plan is usually labor intensive to produce, or is simply unavailable.

R. Avik, et al.: "Localization of LTE measurement records with missing information", IEEE INFOCOM 2016, THE 35 ANNUAL IEEE INTERNATIONAL CONFERENCE ON COMPUTER COMMUNICATIONS, IEEE, 10. April 2016, pages 1-9, DOI: 10.1109/ INFOCOM.2016.7524370; relates to machine learning based algorithms to infer whether a mobile was outdoor and if so, it infers the latitude-longitude associated with the measurement record.

J. Zhiping, et al. "Wi-Fi Fingerprint Based Indoor Localization without Indoor Space Measurement", 2013 IEEE 10th INTERNATIONAL CONFERENCE ON MOBILE AD-HOC AND SENSOR SYSTEMS, IEEE, 14. October 2013, pages 384-392, DOI: 10.1109/MASS.2013.84; relates to a sensor-free crowd sensing indoor localization scheme based on a graph matching based manifold alignment process, which automatically finds the best correspondence between floor plan and wireless fingerprint transition structure.

US 2015/005015 A1 relates a method of achieving near-fingerprinting accuracy without fingerprinting database costs, via parametric representation of training data.

Generally, previous Wi-Fi fingerprint approaches deal with clustering Wi-Fi fingerprints on a small scale, i.e. in a certain building. Other works have dealt with indoor-outdoor detection, although they avoid utilization of Wi-Fi fingerprints.

It is therefore an object of the invention to provide a system and method for detecting indoor-outdoor position of a mobile device user using Wi-Fi fingerprints.

It is another object of the invention to provide a system and method for clustering Wi-Fi fingerprints using a new algorithm, and index structure, and a similarity measure.

It is yet another object of the invention to provide a system and method for training an indoor-outdoor classifier that while it is trained on a specific location, it can be generalized to new locations.

Other objects and advantages of the invention will become apparent as the description proceeds.

### Summary of the Invention

The present invention relates to a system for detecting the indoor and outdoor location of a mobile device user, comprising:

a. one or more Wi-Fi Access Points (APs);

b. one or more mobile devices, adapted to scan for Wi-Fi APs and receive a Received Signal Strength Indication (RSSI) level of one or more detected AP;

c. a training set comprising Wi-Fi fingerprints, each Wi-Fi fingerprint comprising: i) RSSI levels of each detected AP; and ii) a label indicating if the mobile device was indoors or outdoors when obtaining the Wi-Fi fingerprint; and

d. a trained classifier being a software module, adapted to:

  i. receive as input one or more Wi-Fi fingerprints from the training set;

  ii. cluster the one or more Wi-Fi: fingerprints by using a distance/similarity function that is based on rank correlation, which aims to measure the relationship of different ordinal variables, wherein each fingerprint is referred to as an ordinal variable where the APs are ranked from the strongest to the weakest;

  iii. generate a fingerprint transition graph, the graph being an undirected, cluster transition graph, the nodes of which are the clusters; and

  iv. classify, using a dedicated classification algorithm each node of the fingerprint transition graph to indoor or outdoor, by extracting features related to the RSSI of the nodes;

According to an embodiment of the invention, the training set comprises Wi-Fi fingerprints of APs which were scanned for at a time which preceded the classification, and wherein the classification is performed offline.

According to an embodiment of the invention, the one or more mobile devices scan for Wi-Fi APs, the RSSI level of each one or more detected Wi-Fi APs is sent as the training set to the classifier, the nodes of the fingerprint transition graph are classified online, and the indoor and outdoor location of the mobile device user is determined online according to the classification.

According to an embodiment of the invention, the training set is updated periodically with one or more new Wi-Fi fingerprints, and wherein the indoor and outdoor location classification of the mobile device user is updated periodically according to the one or more new Wi-Fi fingerprints.

According to an embodiment of the invention, a given fingerprint is merged with the consecutive fingerprint for a certain amount of time.

According to an embodiment of the invention, a time-based sliding window is used wherein a given fingerprint is merged with the consecutive fingerprint for a certain amount of time.

According to an embodiment of the invention, the clustering of one or more Wi-Fi fingerprints comprises:

  a. calculating the similarity measure between the one or more Wi-Fi fingerprints;

  b. providing, as input to a clustering algorithm: i) the one or more Wi-Fi fingerprints and their similarity measures; ii) a distance threshold for neighborhood queries; and iii) a minimum number of points in a cluster for not considering it as noise; and

  c. receiving, as output from the clustering algorithm, Wi-Fi fingerprint clusters.

According to an embodiment of the invention, the similarity measure is Spearman's p.

According to an embodiment of the invention, the clustering algorithm is Density-Based Spatial Clustering of Applications with Noise (DBSCAN) or a light version of DBSCAN (DBSCANLight).

According to an embodiment of the invention, the clustering of one or more Wi-Fi fingerprints is comprises:

  a. mapping, in the form of a Hash Table, between each access point (AP) and the fingerprints which picked the AP; and

  b. ranking, for each Wi-Fi fingerprint, the APs in descending order, from strongest to weakest;

According to an embodiment of the invention, the classification of the nodes is determined according to 5 distances of the following features: number of neighbors, average power in neighborhood, average number of aps in a scan in neighborhood, and average number of fingerprints in neighborhood.

According to an embodiment of the invention, the classification algorithm is one of the following: a decision tree, a gradient boosting machine incorporated with randomization, a gradient boosting machine not incorporated with randomization, a random forest algorithm, a rotation forest algorithm, or any combination of them.

In another aspect, the present invention relates to a method for detecting the indoor and outdoor location of a mobile device user, comprising:

  a) providing one or more Wi-Fi Access Points (APs);

  b) providing one or more mobile devices, adapted to scan for Wi-Fi APs and receive a Received Signal Strength Indication (RSSI) level of one or more detected AP;

  c) providing a training set comprising Wi-Fi fingerprints, each Wi-Fi fingerprint comprising: i) RSSI levels of each detected AP; and ii) a label indicating if the mobile device was indoors or outdoors when obtaining the Wi-Fi fingerprint; and

d) receiving as input to a trained classifier one or more Wi-Fi fingerprints from said training set;

e) clustering the one or more Wi-Fi fingerprints by using a distance/similarity function that is based on rank correlation, which aims to measure the relationship of different ordinal variables, wherein each fingerprint is referred to as an ordinal variable where the APs are ranked from the strongest to the weakest;

f) generating a fingerprint transition graph, the graph being an undirected, cluster transition graph, the nodes of which are the clusters; and

g) classifying, using a dedicated classification algorithm each node of the fingerprint transition graph to indoor or outdoor, by extracting features related to the RSSI of the nodes.

## Brief Description of the Drawings

In the drawings:

- Fig. 1A is a pseudo code of a Density-Based Spatial Clustering of Applications with Noise (DBSCAN) clustering algorithm;
- Fig. 1B is a pseudo code of DBSCANLight clustering algorithm;
- Fig. 2 schematically illustrates a Hash Table between Access Points (APs) and Fingerprints (FPs); and
- Fig. 3 shows a transition graph.

## Detailed Description of the Invention

Throughout this description the term "mobile device" is used to indicate a computing device adapted to be carried by a user (e.g., typically small enough to be handheld or wearable by a user), and which is equipped with a Wi-Fi transceiver. This term does not imply any particular shape, or geometry, and invention is applicable to all suitable computing devices, such as smartphones, smartwatches, tablets, and the like. In addition, a mobile device has an operating system (OS), and can run various types of application software, known as apps or applications. The mobile device can also be equipped with wireless communication means (e.g., Wi-Fi, Bluetooth, NFC as well as GPS capabilities) that can allow connections to the Internet and other devices, or can be used to provide location-based services.

Reference will now be made to several embodiments of the present invention, examples of which are illustrated in the accompanying figures. Wherever practicable similar or like reference numbers may be used in the figures and may indicate similar or like functionality. The figures depict embodiments of the present invention for purposes of illustration only. One skilled in the art will readily recognize from the following description that alternative embodiments of the structures and methods illustrated herein may be employed without departing from the principles of the invention described herein.

The following discussion is intended to provide a brief, general description of a suitable computing environment of a client side and a server in which the invention may be implemented. While the invention will be described in the general context of program modules that execute in conjunction with an application program that runs on an operating system on a mobile device and on a server, those skilled in the art will recognize that the invention may also be implemented in combination with other program modules and computing devices. Moreover, the invention may be practiced in distributed computing environments where tasks are performed by remote processing devices (e.g., a mobile device and a server) that are linked through a communications network. In a distributed computing environment, program modules may be located in both local and remote memory storage devices.

Wireless Local Area Networks (WLANs) based on IEEE 802.11 standards, also known as Wi-Fi, transmit "beacon frames" periodically which announce the presence of an Access Point (AP). Mobile device operating systems, such as iOS and Android, allow a scan of available Wi-Fi Aps in the device's vicinity. The result of such a scan contains the Basic Service Set ID (BSSID) of the AP, the Service Set ID (SSID) of the AP, the Received Signal Strength Indication (RSSI) and other information such as the capabilities and the frequency of the network. For localization purposes, the most important attributes are the BSSID which serves as a unique identifier of a physical device and the level of the network, RSSI, which is used as an indicator of the distance between the device and the AP. Besides the above another attribute which can be used for Wi-Fi fingerprinting is the Time of Flight (ToF) of the network signal.

A Wi-Fi fingerprint is a set of APs returned from a Wi-Fi scan, and potentially the levels of the APs. Wi-Fi fingerprints can be used to distinguish between locations with very precise resolutions. Each feature of a given fingerprint is an AP. The values are the RSSI levels indicating the signal strength.

According to an embodiment of the invention a time-based sliding window is used wherein a given fingerprint is merged with the consecutive fingerprint for a certain amount of time.

A fingerprint that contains only an empty Wi-Fi scan is recognized as an "empty" fingerprint. Although two empty fingerprints might look identical, the scan picked no AP for both of them, therefore they might be very different. It is very likely that they were collected in different locations, unless they were collected sequentially.

RSSI is a measure for the power in a received radio signal. There are various methods to measure the RSSI. In an IEEE 802.11system the RSSI is measured in arbitrary units and not in dBm as signal strength is usually measured. Yet, it tends to behave similarly to the signal strength, as on a logarithmic scale, Android operating system uses dBm as the units of RSSI.

## Clustering

A successful clustering process begins by selecting a proper distance/similarity function. A natural distance function would be based on rank correlation, which aims to measure the relationship of different ordinal variables. Each fingerprint can be seen as such an ordinal variable where the APs are ranked from the strongest to the weakest.

A well-defined and tested coefficient, Spearman's p, is used over a newly formulated distance function. $\rho$ is defined as the Pearson correlation between ranked variables, and is defined by Eq. 1, wherein n is the number of observations, $d_i = x_i - y_i$ is the difference between the ranks.

$$\rho = 1 - \frac{6 \sum d_i^2}{n(n^2 - 1)} \qquad \text{Eq. 1}$$

Spearman's p is the most suitable coefficient as it degrades large differences between the variables which is a positive characteristic in the case of Wi-Fi fingerprints. Thus, the clustering process uses p as a similarity measure. Another representation of the similarity measure is by a distance measure, $d = 1 - \rho$. The similarity or distance measure is a parameter of the clustering algorithm, as will be explained hereinafter.

When comparing two fingerprints, the sets of available APs might not be equal. Furthermore, the data contains thousands of APs (each one is a feature), while the fingerprint contains approximately ten APs. In order to compare two fingerprints, the clustering method acts as follows: the union of the APs from two of the fingerprints is calculated, and then for each of the fingerprints the APs are ranked from the strongest to the weakest while the missing APs in one of the fingerprints are added to the end of its list, and sorted in a deterministic order (e.g., sorting by the BSSID in alphabetic order). This is performed in order to minimize the error that might arise from this artificial phase.

Spearman's p value ranges from a perfect correlation at +1 and an absolute opposite correlation at -1, to no correlation at all with the value of 0. The value of -1 can be interpreted as higher than 0, although an opposite correlation (negative values) does not suggest a good correlation between two Wi-Fi fingerprints. Therefore, such fingerprints can be regarded as distant fingerprints. Therefore, the interesting range of Spearman's p coefficient is [+1,0].

It is noted that two fingerprints with no AP in common result in a similarity of 0. If the union of two fingerprints is a single AP, the similarity is 1 if they share the same AP and 0 otherwise. In order to support a transition graph creation, the distance regarding an empty fingerprint is defined as follows: the similarity involving an empty fingerprint is 1 only if both of the fingerprints are empty and they were collected in consecutive Wi-Fi scans. Otherwise, the similarity is 0.

The off-line clustering process of Wi-Fi fingerprints involves two main challenges:

> 1. Fingerprints can be produced in high velocity-a few seconds for a new fingerprint. This results in tens of thousands of fingerprints per day.
> 2. The data is high dimensional in that each AP in the data is a feature.

Any clustering algorithm known in the art can be used for the purpose of indoor-outdoor detection. The most popular and acknowledged density based clustering algorithm is Density-Based Spatial Clustering of Applications with Noise (DBSCAN), although it suffers from inability to handle data with varying cluster densities.

In order to cluster a large amount of given Wi-Fi fingerprints in a reasonable time span and considering the challenges above, two solutions are presented:

> 1. A light version of DBSCAN (DBSCANLight) to allow less neighborhood query (regionQuery) invocations. DBSCANLight can handle any instance type, and is not limited to Wi-Fi fingerprints.
> 2. Data structure that can handle the Wi-Fi fingerprints regionQuery operation efficiently based on Spearman's rank correlation coefficient, or any rank correlation coefficient.

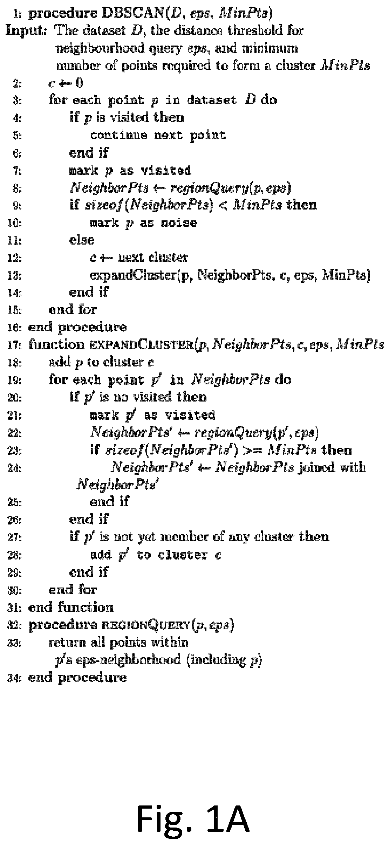

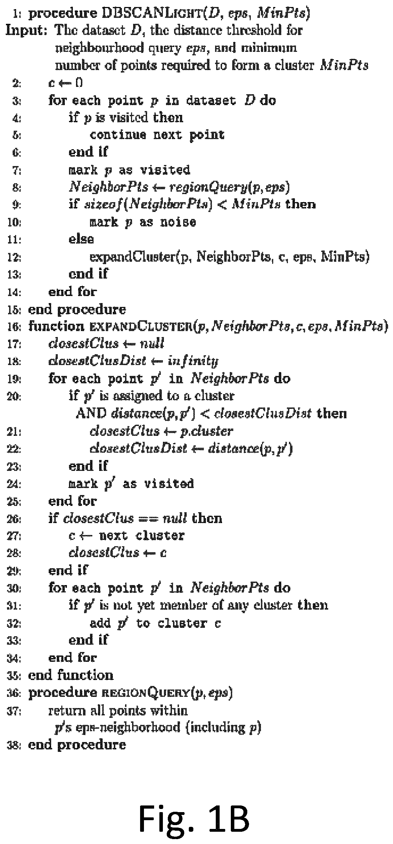

Fig. 1A is a pseudo code of DBSCAN density based clustering algorithm, and Fig. 1B is a pseudo code of DBSCANLight clustering algorithm. Both of the algorithms' inputs are the dataset D and two parameters: eps - the distance threshold for neighborhood query and MinPts - the minimum number of points in a cluster for not considering it as noise.

Lines 1 to 15 are almost identical for both algorhtims, besides for incrementing the current cluster (line 12 for DBSCAN), these lines iterate over all of the points (instances), and make sure we don't expand a cluster using a point that is already assigned to a cluster. Lines 9 to 10 specifically are meant to classify noise using the MinPts parameter.

The significant difference is in the expandCluster function. In the original algorithm it meant to merely expand the current cluster. In DBSCANLight on the other hand this function might assign the current point and its neighbors to an existing cluster, or start a new cluster if needed.

The body of the *for* loop starting in line 19 has different a purpose in DBSCANLight. Unlike in DBSCAN, in DBSCANLight the neighborPts set is not growing by joining more neighbors. Instead as can be seen in lines 20 to 23 the algorithm finds the closest existing cluster to point *p.*

Line 24 in DBSCANLight acts in a similar manner to line 21 in DBSCAN, and is meant to mark the point as visited.

If DBSCANLight does not find an existing cluster in the neighborhood of p, lines 26 to 29 are meant to start a new cluster (in a similar manner to line 12 in DBSCAN). Lines 30 to 34 assign the unassigned points to the closest existing cluster to *p,* or in its absence to the new cluster.

The regionQuery function (lines 32 to 34 in DBSCAN and 36 to 38 in DBSCANLight) returns all of the eps neighbors of a given point. This can be achieved by iterating over all of the points, or more efficiently using an index structure for example.

The eps-neighborhood of a point when using a similarity measure such as spearman correlation coefficient is a set containing all of the points with similarity equal to or larger than the eps.

DBSCANLight supports the noise concept like DBSCAN does, but for the purpose of Wi-Fi fingerprint clustering and transition graph creation, the MinPts is set to one in order to allow the assignment of each one of the fingerprints to a cluster. Consequently, the algorithm does not classify any noise.

## Data Structure

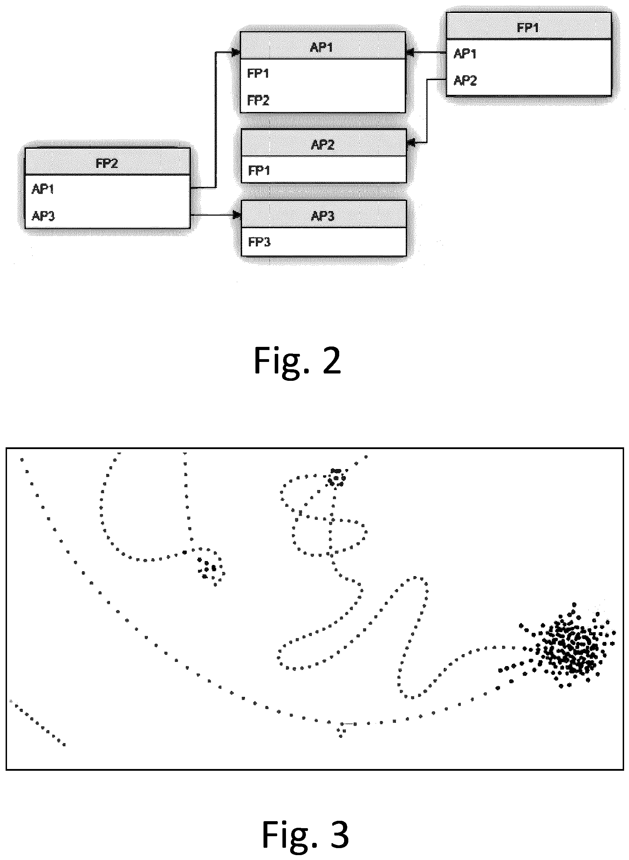

Spearman's p is used as a similarity measure for Wi-Fi fingerprints. The fingerprint space is characterized by a large number of instances where the vast majority of instance couples result in the similarity of 0 (maximal distance), as they do not have any AP in common. In order to avoid calculating the distance of such instances, mapping is used in the form of Hash Table between each AP and the fingerprints which picked this AP, as is presented in Fig. 2 - FP to AP and AP to FP mapping. For a given fingerprint, the neighborhood query is narrowed to the fingerprints that have at least one AP in common. Fig. 2 schematically illustrates a Hash Table between Access Points (API, AP2 and AP3) and Fingerprints (FP1, FP2 and FP3).

In order to filter the list to the eps distant neighbors, the precise rank correlation coefficient must be calculated. A rank correlation calculation for a fingerprint involves ranking the APs in descending order, from the strongest to the weakest. Because the ranking for a given fingerprint will probably be used more than once, mapping is held. An example for such mapping is a Hash Table between each of the APs and its rank in the fingerprint.

## Fingerprint Transition Graph

In order to consider the order in which the fingerprints were collected-or in other words, the dimension of time-a cluster transition graph is used. The transition graph G is an undirected graph where the nodes are the clusters (each containing at least one fingerprint), and an edge is added between two nodes/clusters if the nodes contain consecutive fingerprints. The edges can potentially contain a value, the strength of the link indicated by the number of times a particular transition is presented in the data.

In the resulting graph, outdoor fingerprints tend to line up in long chains while indoor fingerprints tend to remain concentrated around a dense area. An interesting observation about this graph is that although more time is spent indoors, the graph contains more outdoor nodes than indoor nodes. Fig. 3 shows an example of a transition graph, wherein dark nodes represent clusters collected indoors and light nodes represent clusters collected outdoors.

As stated above, indoor and outdoor nodes tend to align differently in their environment, and therefore, extracting features from the graph will allow classification of the nodes. Classifying the nodes of the transition graph will allow classification of the fingerprint. Although such a classification algorithm does not rely on an explicit input from the user for new places, it does require a pre-process in order to build a meaningful graph.

The nodes are used to classify the fingerprints, and therefore they represent them. Hence, the importance of the nodes depends on the number of the fingerprints that a node represents. As a result of the insight above, the number of fingerprints that a node contains (number of fingerprints in the cluster) can be used as weights for the instances fed to the inducer during the training phase (if the algorithm supports them).

## Classifying Nodes

The transition graph describes the reality abstractly. It carries more information than the fingerprints themselves or the clusters. In order to classify the nodes, the first stage is to extract meaningful features.

The features that were selected to classify a node were a product of its neighborhood: the number of neighbor nodes, average power (RSSI) in the neighborhood, the average number of APs per scan in the neighborhood, and the average number of fingerprints in the neighborhood. The neighborhood $N$ of node $x$ at distance $d$ is defined as:

$N_x(d) = \{y \mid y \text{ is reachable from } x \text{ in cost } d \text{ or less}\}$

In our case, the cost between any two neighboring nodes is equal to one. The neighborhood can be calculated by returning the result of a BFS starting from $x$ and bounded by distance d.

The features described above can be calculated for various neighborhood sizes, and in practice, using various sizes contributes to the final model. A linear regression model is created where the dependent variable is the classification itself (indoors/outdoors), and the explanatory variables are the features of each of the tested distances. The significance level for each coefficient is determined (using t-tests) and the significant variables (P-value $\leq 0.05$) are selected. The distances that are selected are those represented by significant variables. The final values for each of the neighborhood sizes are shown in Table 1.

Table 1

| Name | Min. Neighborhood Size | Max.Neighborhood Size |
|---|---|---|
| Number of Neighbors | 2 | 6 |
| Average Power in Neighborhood | 0 | 4 |
| Average Number of APs in a Scan in Neighborhood | 0 | 4 |
| Average Number of Fingerprints in Neighborhood | 0 | 4 |

Although RSSI units are not defined by IEEE 802.11 standard, the units tend to behave logarithmically. Android OS, for example, uses dBm as its units. Converting power from dBm to a linear scale representation of the power is performed according to:

$$power = 10^{\frac{RSSI}{10}}.$$

According to an embodiment of the invention, a total of 20 features are used-four different features at five different distances. The "number of the neighbors" neighborhood size is exceptional (starts at distance 2 to 6). The "neighbors at distance 0" is always equal to one, while the neighbors at distance 1 were not significant in the ANOVA analysis.

Each of the nodes is used as an instance with the 20 features described above; the number of fingerprints in each of the nodes is used as its weight.

According to an embodiment of the invention, a decision tree is used as a classification algorithm. A decision tree is a hierarchical predictive model of decisions which is used for classification and regression. Some of today's state-of-the-art algorithms are based on decision trees in conjunction with other meta-algorithms, such as bagging and boosting.

According to another embodiment of the invention, the classification algorithm is a Gradient Boosting Machine (GBM), which is an ensemble learning method for regression and classification problems. GBM is based on the boosting meta-algorithm, which in general consists of iteratively learning weak classifiers and reweighing the misclassified instances. GBM specifically learns by consecutively fitting new models to provide a more accurate result. According to an embodiment of the invention, randomization is incorporated into the procedure.

According to still another embodiment of the invention, the classification algorithm is a Random Forest algorithm, which is an ensemble learning method that corrects decision trees' habit of overfitting to the training set by "bagging" the instances and creating an unpruned tree from each such bag. This also is performed by selecting a subset of the space randomly at each node split. Each tree in the forest is likely to be less accurate than a decision tree with the same splits, though combining a large number of trees can improve the accuracy. The generalization error of the model converges to a limit as the number of trees grows to large values.

According to yet another embodiment of the invention, the classification algorithm is a Rotation Forest, which is an ensemble method based on splitting the data into subsets and applying Principal Component Analysis (PCA) to each subset. The two main parameters to tune in Rotation Forest are the number of variable subsets and the number of base classifiers.

Once the nodes are classified, they can be referenced for recognizing the indoor/outdoor location of a mobile device user. The recognition can be performed by sending fingerprints to the classifier, and having the classifier associating the fingerprints with a previously classified node which is either indoor or outdoor.

Although embodiments of the invention have been described by way of illustration, it will be understood that all the above description and examples have been given for the purpose of illustration and are not intended to limit the invention in any way. The invention may be carried out with many variations, modifications, and adaptations, without exceeding the scope of the claims.

**Claims**

1. A system for detecting the indoor and outdoor location of a mobile device user, comprising:

   a) one or more Wi-Fi Access Points, APs,);
   b) one or more mobile devices, adapted to scan for Wi-Fi APs and receive a Received Signal Strength Indication, RSSI, level of one or more detected AP; and
   c) a training set comprising Wi-Fi fingerprints, each Wi-Fi fingerprint comprising: i) RSSI levels of each detected AP; and ii) a label indicating if the mobile device was indoors or outdoors when obtaining the Wi-Fi fingerprint;
   d) a trained classifier being a software module, adapted to:

      i. receive as input one or more Wi-Fi fingerprints from the training set, the system **characterized in that** the trained classifier is further adapted to:
      ii. cluster the one or more Wi-Fi fingerprints by using a distance/similarity function that is based on rank correlation, which aims to measure the relationship of different ordinal variables, wherein each fingerprint is referred to as an ordinal variable where the APs are ranked from the strongest to the weakest;
      iii. generate a fingerprint transition graph, the graph being an undirected, cluster transition graph, the nodes of which are the clusters; and
      iv. classify, using a dedicated classification algorithm each node of the fingerprint transition graph to indoor or outdoor, by extracting features related to the RSSI of the nodes.

2. A system for detecting the indoor and outdoor location of a mobile device user according to claim 1, wherein the training set comprises Wi-Fi fingerprints of APs which were scanned for at a time which preceded the classification, and wherein the classification is performed offline.

3. A system for detecting the indoor and outdoor location of a mobile device user according to claim 1 or 2, wherein the one or more mobile devices scan for Wi-Fi APs, the RSSI level of each one or more detected Wi-Fi APs is sent as the training set to the classifier, the nodes of the fingerprint transition graph are classified online, and the indoor and outdoor location of the mobile device user is determined online according to the classification.

4. A system for detecting the indoor and outdoor location of a mobile device user according to any of claims 1 to 3, wherein the training set is updated periodically with one or more new Wi-Fi fingerprints, and wherein the indoor and outdoor location classification of the mobile device user is updated periodically according to the one or more new Wi-Fi fingerprints.

5. A system for detecting the indoor and outdoor location of a mobile device user according to any of claims 1 to 4, wherein a time-based sliding window is used wherein a given fingerprint is merged with the consecutive fingerprint for a certain amount of time.

6. A system for detecting the indoor and outdoor location of a mobile device user according to any of claims 1 to 5, wherein the clustering of one or more Wi-Fi fingerprints comprises:

   a) calculating the similarity measure between the one or more Wi-Fi fingerprints;
   b) providing, as input to a clustering algorithm: i) the one or more Wi-Fi fingerprints and their similarity measures; ii) a distance threshold for neighborhood queries; and iii) a minimum number of points in a cluster for not considering it as noise; and
   c) receiving, as output from the clustering algorithm, Wi-Fi fingerprint clusters.

7. A system for detecting the indoor and outdoor location of a mobile device user according to claim 6, wherein the similarity measure is Spearman's p.

8. A system for detecting the indoor and outdoor location of a mobile device user according to claim 6 or 7, wherein the clustering algorithm is Density-Based Spatial Clustering of Applications with Noise, DBSCAN, or a light version of DBSCAN, DBSCANLight.

9. A system for detecting the indoor and outdoor location of a mobile device user according to any of claims 1 to 8, wherein the clustering of one or more Wi-Fi fingerprints comprises:

   a) mapping, in the form of a Hash Table, between each access point,AP, and the fingerprints which picked the AP; and
   b) ranking, for each Wi-Fi fingerprint, the APs in descending order, from strongest to weakest.

10. A system for detecting the indoor and outdoor location of a mobile device user according to any of claims 1 to 9, wherein classification of the nodes is determined according to 5 distances of the following features:

   • number of neighbors;
   • average power in neighborhood;
   • average number of aps in a scan in neighborhood; and
   • average number of fingerprints in neighborhood.

11. A system for detecting the indoor and outdoor location of a mobile device user according to any of claims 1 to 10, wherein the classification algorithm is one of the following:

   • a decision tree;
   • a gradient boosting machine incorporated with randomization;
   • a gradient boosting machine not incorporated with randomization;
   • a random forest algorithm;
   • a rotation forest algorithm; or any combination of the above.

12. A method for detecting the indoor and outdoor location of a mobile device user, comprising:

   a) providing one or more Wi-Fi Access Points, APs,;
   b) providing one or more mobile devices, adapted to scan for Wi-Fi APs and receive a Received Signal Strength Indication, RSSI, level of one or more detected AP; and
   c) providing a training set comprising Wi-Fi fingerprints, each Wi-Fi fingerprint comprising: i) RSSI levels of each detected AP; and ii) a label indicating if the mobile device was indoors or outdoors when obtaining the Wi-Fi fingerprint;
   d) receiving as input to a trained classifier one or more Wi-Fi fingerprints from said training set; the method **characterized by**
   e) clustering the one or more Wi-Fi fingerprints by using a distance/similarity function that is based on rank correlation, which aims to measure the relationship of different ordinal variables, wherein each fingerprint is referred to as an ordinal variable where the APs are ranked from the strongest to the weakest;
   f) generating a fingerprint transition graph, the graph being an undirected, cluster transition graph, the nodes of which are the clusters; and
   g) classifying, using a dedicated classification algorithm each node of the fingerprint transition graph to indoor or outdoor, by extracting features related to the RSSI of the nodes.

**Patentansprüche**

1. System zum Erfassen des Innen- und Außenstandorts eines Benutzers einer Mobilvorrichtung, mit:

   a) einem oder mehreren Wi-Fi-Zugangspunkten, APs;
   b) einer oder mehreren Mobilvorrichtungen, die eingerichtet sind, nach Wi-Fi-APs abzutasten und einen Empfangssignal-Stärkeanzeige, RSSI, Pegel von einem oder mehreren erfassten APs zu empfangen; und
   c) einem Trainingssatz, der Wi-Fi-Fingerabdrücke aufweist, wobei jeder Wi-Fi-Fingerabdruck aufweist: i) RSSI-Pegel von jedem erfassten AP; und ii) ein Kennzeichen, das anzeigt, ob sich die Mobilvorrichtung beim Erhalten des Wi-Fi-Fingerabdrucks innen oder außen befand;
   d) einem trainierten Klassifikator, der ein Softwaremodul ist, das eingerichtet ist:

i. als Eingabe einen oder mehrere Wi-Fi-Fingerabdrücke aus dem Trainingssatz zu empfangen, wobei das System **dadurch gekennzeichnet ist, dass** der trainierte Klassifikator ferner eingerichtet ist:

ii. den einen oder die mehreren Wi-Fi-Fingerabdrücke mittels einer Entfernungs-/Ähnlichkeitsfunktion zu clustern, die auf einer Rangkorrelation basiert, die darauf abzielt, die Beziehung unterschiedlicher Ordnungsvariablen zu messen, wobei jeder Fingerabdruck als eine Ordnungsvariable bezeichnet wird, wobei die APs von stärksten zum schwächsten eingeordnet werden;

iii. einen Fingerabdruck-Übergangsgraphen zu erzeugen, wobei der Graph ein ungerichteter Cluster-Übergangsgraph ist, dessen Knoten die Cluster sind; und

iv. unter Verwendung eines dedizierten Klassifizierungsalgorithmus durch Extrahieren von Merkmalen, die den RSSI der Knoten betreffen, jeden Knoten des Fingerabdruck-Übergangsgraphen in innen oder außen zu klassifizieren.

**2.** System zum Erfassen des Innen- und Außenstandorts eines Benutzers einer Mobilvorrichtung nach Anspruch 1, wobei der Trainingssatz Wi-Fi-Fingerabdriicke von APs aufweist, die zu einer Zeit abgetastet wurden, die der Klassifizierung vorausging, und wobei die Klassifizierung offline durchgeführt wird.

**3.** System zum Erfassen des Innen- und Außenstandorts eines Benutzers einer Mobilvorrichtung nach Anspruch 1 oder 2, wobei die eine oder die mehreren Mobilvorrichtungen nach Wi-Fi-APs abtasten, der RSSI-Pegel des einen oder der mehreren erfassten Wi-Fi-APs als der Trainingssatz an den Klassifikator gesendet wird, die Knoten des Fingerabdruck-Übergangsgraphen online klassifiziert werden und der Innen- und Außenstandort des Benutzers der Mobilvorrichtung gemäß der Klassifizierung online bestimmt wird.

**4.** System zum Erfassen des Innen- und Außenstandorts eines Benutzers einer Mobilvorrichtung nach einem der Ansprüche 1 bis 3, wobei der Trainingssatz periodisch mit einem oder mehreren neuen Wi-Fi-Fingerabdrücken aktualisiert wird, und wobei die Innen- und Außenstandort-Klassifizierung des Benutzers der Mobilvorrichtung periodisch gemäß dem einen oder den mehreren neuen Wi-Fi-Fingerabdrücken aktualisiert wird.

**5.** System zum Erfassen des Innen- und Außenstandorts eines Benutzers einer Mobilvorrichtung nach einem der Ansprüche 1 bis 4, wobei ein zeitbasiertes gleitendes Fenster verwendet wird, wobei ein gegebener Fingerabdruck für eine bestimmte Zeitdauer mit dem aufeinanderfolgenden Fingerabdruck zusammengeführt wird.

**6.** System zum Erfassen des Innen- und Außenstandorts eines Benutzers einer Mobilvorrichtung nach einem der Ansprüche 1 bis 5, wobei das Clustering des einen oder der mehreren Wi-Fi-Fingerabdrücke aufweist:

a) Berechnen des Ähnlichkeitsmaßes zwischen dem einen oder den mehreren Wi-Fi-Fingerabdrücken;

b) Bereitstellen als Eingabe für einen Clustering-Algorithmus: i) den einen oder die mehreren WiFi-Fingerabdrücke und ihre Ähnlichkeitsmaße; ii) eine Entfernungsschwelle für Nachbarschaftsabfragen; und iii) eine Mindestanzahl von Punkten in einem Cluster, um es nicht als Rauschen zu betrachten; und

c) Empfangen von Wi-Fi-Fingerabdruck-Clustern als Ausgabe des Clustering-Algorithmus.

**7.** System zum Erfassen des Innen- und Außenstandorts eines Benutzers einer Mobilvorrichtung nach Anspruch 6, wobei das Ähnlichkeitsmaß das Spearman'sche p ist.

**8.** System zum Erfassen des Innen- und Außenstandorts eines Benutzers einer Mobilvorrichtung nach Anspruch 6 oder 7, wobei der Clustering-Algorithmus Density-Based Spatial Clustering of Applications with Noise, DBSCAN, oder eine light-Version von DBSCAN, DBSCANLight, ist.

**9.** System zum Erfassen des Innen- und Außenstandorts eines Benutzers einer Mobilvorrichtung nach einem der Ansprüche 1 bis 8, wobei das Clustering des einen oder der mehreren Wi-Fi-Fingerabdrücke aufweist:

a) Bilden einer Zuordnung in Form einer Hash-Tabelle zwischen jedem Zugangspunkt, AP, und den Fingerabdrücken, die den AP ausgewählt haben,; und

b) Bilden einer Rangfolge der APs in absteigender Reihenfolge vom stärksten zum schwächsten für jeden Wi-Fi-Fingerabdruck.

**10.** System zum Erfassen des Innen- und Außenstandorts eines Benutzers einer Mobilvorrichtung nach einem der Ansprüche 1 bis 9, wobei die Klassifizierung der Knoten gemäß 5 Entfernungen der folgenden Merkmale bestimmt wird:

- Anzahl der Nachbarn;
- durchschnittliche Leistung in der Nachbarschaft;
- durchschnittliche Anzahl von APs in einer Abtastung in der Nachbarschaft; und
- durchschnittliche Anzahl der Fingerabdrücke in der Nachbarschaft.

**11.** System zum Erfassen des Innen- und Außenstandorts eines Benutzers einer Mobilvorrichtung nach einem der Ansprüche 1 bis 10, wobei der Klassifizierungsalgorithmus einer der folgenden ist:

- ein Entscheidungsbaum;
- eine gradient boosting machine mit integrierter Randomisierung;
- eine gradient boosting machine ohne integrierte Randomisierung;
- ein random forest -Algorithmus;
- ein rotation forest-Algorithmus; oder eine beliebige Kombination der obigen.

**12.** Verfahren zum Erfassen des Innen- und Außenstandorts eines Benutzers einer Mobilvorrichtung, das aufweist:

a) Bereitstellen von einem oder mehreren Wi-Fi-Zugangspunkten, APs;

b) Bereitstellen einer oder mehrerer Mobilvorrichtungen, die eingerichtet sind, nach Wi-Fi-APs abzutasten und einen Empfangssignal-Stärkeanzeige, RSSI, Pegel von einem oder mehreren erfassten APs zu empfangen; und

c) Bereitstellen eines Trainingssatzes, der Wi-Fi-Fingerabdrücke aufweist, wobei jeder Wi-Fi-Fingerabdruck aufweist: i) RSSI-Pegel von jedem erfassten AP; und ii) ein Kennzeichen, das anzeigt, ob sich die Mobilvorrichtung beim Erhalten des Wi-Fi-Fingerabdrucks innen oder außen befand;

d) Empfangen von einem oder mehreren Wi-Fi-Fingerabdrücken aus dem Trainingssatz als Eingabe in einen trainierten Klassifikator; wobei das Verfahren **gekennzeichnet ist durch**

e) Clustering des einen oder der mehreren Wi-Fi-Fingerabdrücke mittels einer Entfernungs-/Ähnlichkeitsfunktion, die auf der Rangkorrelation basiert, die darauf abzielt, die Beziehung unterschiedlicher Ordnungsvariablen zu messen, wobei jeder Fingerabdruck als eine Ordnungsvariable bezeichnet wird, wobei die APs von stärksten zum schwächsten eingeordnet werden;

f) Erzeugen eines Fingerabdruck-Übergangsgraphen, wobei der Graph ein ungerichteter Cluster-Übergangsgraph ist, dessen Knoten die Cluster sind; und

g) Klassifizieren unter Verwendung eines dedizierten Klassifizierungsalgorithmus jedes Knotens des Fingerabdruck-Übergangsgraphen in innen oder außen, durch Extrahieren von Merkmalen, die den RSSI der Knoten betreffen.

## Revendications

**1.** Système de détection de localisation intérieure et extérieure d'un utilisateur de dispositif mobile, comprenant :

a) un ou plusieurs points d'accès AP Wi-Fi ;

b) un ou plusieurs dispositifs mobiles, prévus pour balayer des AP Wi-Fi et recevoir un niveau d'indication d'intensité de signal reçu RSSI d'un ou de plusieurs AP détectés ; et

c) un ensemble d'apprentissage comprenant des empreintes digitales Wi-Fi, chaque empreinte digitale Wi-Fi comprenant : i) des niveaux RSSI de chaque AP détecté ; et ii) une étiquette indiquant si le dispositif mobile était intérieur ou extérieur lors de l'obtention de l'empreinte digitale Wi-Fi ;

d) un classificateur entraîné étant un module logiciel permettant de :

i. recevoir comme entrée une ou plusieurs empreintes digitales Wi-Fi de l'ensemble d'apprentissage, ledit système étant **caractérisé en ce que** le classificateur entraîné permet en outre de :

ii. regrouper la ou les empreintes digitales Wi-Fi au moyen d'une fonction de distance/similarité basée sur une corrélation de rang, visant à mesurer la relation de différentes variables ordinales, chaque empreinte digitale étant qualifiée de variable ordinale où les AP sont classés du plus fort au plus faible ;

iii. générer un graphe de transition d'empreinte digitale, ledit graphe étant un graphe non orienté de transition de groupe, dont les nœuds sont les clusters ; et

iv. classer, au moyen d'un algorithme de classification dédié, chaque nœud du graphe de transition d'empreinte digitale comme présenté à l'intérieur ou à l'extérieur, par extraction de caractéristiques associées au RSSI des nœuds.

2. Système de détection de localisation intérieure et extérieure d'un utilisateur de dispositif mobile selon la revendication 1, où l'ensemble d'apprentissage comprend des empreintes digitales Wi-Fi d'AP ayant été balayés pendant un temps précédant la classification, et où la classification est effectuée hors ligne.

3. Système de détection de localisation intérieure et extérieure d'un utilisateur de dispositif mobile selon la revendication 1 ou la revendication 2, où le ou les dispositifs mobiles balaient des AP Wi-Fi, le niveau RSSI de chacun des un ou plusieurs AP Wi-Fi détectés est transmis comme ensemble d'apprentissage au classificateur, les nœuds du graphe de transition d'empreinte digitale sont classés en ligne, et la localisation intérieure et extérieure de l'utilisateur de dispositif mobile est déterminée en ligne en fonction de la classification.

4. Système de détection de localisation intérieure et extérieure d'un utilisateur de dispositif mobile selon l'une des revendications 1 à 3, où l'ensemble d'apprentissage est mis à jour périodiquement avec une ou plusieurs nouvelles empreintes digitales Wi-Fi, et où la classification de localisation intérieure et extérieure de l'utilisateur de dispositif mobile est mise à jour périodiquement en fonction de la ou des nouvelles empreintes digitales Wi-Fi.

5. Système de détection de localisation intérieure et extérieure d'un utilisateur de dispositif mobile selon l'une des revendications 1 à 4, où une fenêtre glissante basée sur le temps est utilisée, où une empreinte digitale donnée est fusionnée avec l'empreinte digitale consécutive pendant une certaine durée.

6. Système de détection de localisation intérieure et extérieure d'un utilisateur de dispositif mobile selon l'une des revendications 1 à 5, où le regroupement d'une ou de plusieurs empreintes digitales Wi-Fi comprend :

a) le calcul de la mesure de similarité entre la ou les empreintes digitales Wi-Fi ;
b) la fourniture comme entrée à un algorithme de regroupement : i) de la ou des empreintes digitales Wi-Fi et leurs mesures de similarité ; ii) d'un seuil de distance pour des interrogations de voisinage ; et iii) d'un nombre minimum de points dans un cluster pour ne pas considérer celle-ci comme bruit ; et
c) le réception comme sortie de l'algorithme de regroupement, de clusters d'empreintes digitales Wi-Fi.

7. Système de détection de localisation intérieure et extérieure d'un utilisateur de dispositif mobile selon la revendication 6, où la mesure de similarité est p de Spearman.

8. Système de détection de localisation intérieure et extérieure d'un utilisateur de dispositif mobile selon la revendication 6 ou la revendication 7, où l'algorithme de regroupement est un regroupement spatial basé sur la densité des applications avec le bruit DBSCAN, ou une version légère de DBSCAN, DBSCANLight.

9. Système de détection de localisation intérieure et extérieure d'un utilisateur de dispositif mobile selon l'une des revendications 1 à 8, où le regroupement d'une ou de plusieurs empreintes digitales Wi-Fi comprend :

a) le mappage, sous forme d'une table de hachage, entre chaque point d'accès AP, et les empreintes digitales ayant capté l'AP ; et
b) le classement pour chaque empreinte digitale Wi-Fi des AP par ordre décroissant, du plus fort au plus faible.

10. Système de détection de localisation intérieure et extérieure d'un utilisateur de dispositif mobile selon l'une des revendications 1 à 9, où la classification des nœuds est déterminée en fonction de 5 distances des caractéristiques suivantes :

• nombre de voisins ;
• puissance moyenne dans le voisinage ;
• nombre moyen d'AP dans un balayage de voisinage ; et
• nombre moyen d'empreintes digitales dans le voisinage.

11. Système de détection de localisation intérieure et extérieure d'un utilisateur de dispositif mobile selon l'une des revendications 1 à 10, où l'algorithme de classification est l'un des suivants :

• un arbre de décision ;

• une machine d'amplification de gradient incorporée à une randomisation ;
• une machine d'amplification de gradient non incorporée à une randomisation ;
• un algorithme de forêts aléatoires ;
• un algorithme de forêts à révolution ; ou une combinaison quelconque des précédents.

12. Procédé de détection de localisation intérieure et extérieure d'un utilisateur de dispositif mobile, comprenant :

a) la fourniture d'un ou de plusieurs points d'accès AP Wi-Fi ;

b) la fourniture d'un ou de plusieurs dispositifs mobiles, prévus pour balayer des AP Wi-Fi et recevoir un niveau d'indication d'intensité de signal reçu RSSI d'un ou de plusieurs AP détectés ; et

c) la fourniture d'un ensemble d'apprentissage comprenant des empreintes digitales Wi-Fi, chaque empreinte digitale Wi-Fi comprenant : i) des niveaux RSSI de chaque AP détecté ; et ii) une étiquette indiquant si le dispositif mobile était intérieur ou extérieur lors de l'obtention de l'empreinte digitale Wi-Fi ;

d) la réception comme entrée vers un classificateur entraîné d'une ou de plusieurs empreintes digitales Wi-Fi de l'ensemble d'apprentissage ; ledit procédé étant **caractérisé par**

e) le regroupement de la ou des empreintes digitales Wi-Fi au moyen d'une fonction de distance/similarité basée sur une corrélation de rang, visant à mesurer la relation de différentes variables ordinales, chaque empreinte digitale étant qualifiée de variable ordinale où les AP sont classés du plus fort au plus faible ;

f) la génération d'un graphe de transition d'empreinte digitale, ledit graphe étant un graphe non orienté de transition de groupe, dont les nœuds sont les clusters ; et

g) le classement, au moyen d'un algorithme de classification dédié, de chaque nœud du graphe de transition d'empreinte digitale comme présenté à l'intérieur ou à l'extérieur, par extraction de caractéristiques associées au RSSI des nœuds.

```
1: procedure DBSCAN(D, eps, MinPts)
Input: The dataset D, the distance threshold for
       neighbourhood query eps, and minimum
       number of points required to form a cluster MinPts
2:     c ← 0
3:     for each point p in dataset D do
4:         if p is visited then
5:             continue next point
6:         end if
7:         mark p as visited
8:         NeighborPts ← regionQuery(p, eps)
9:         if sizeof(NeighborPts) < MinPts then
10:            mark p as noise
11:        else
12:            c ← next cluster
13:            expandCluster(p, NeighborPts, c, eps, MinPts)
14:        end if
15:    end for
16: end procedure
17: function EXPANDCLUSTER(p, NeighborPts, c, eps, MinPts)
18:     add p to cluster c
19:     for each point p' in NeighborPts do
20:         if p' is no visited then
21:             mark p' as visited
22:             NeighborPts' ← regionQuery(p', eps)
23:             if sizeof(NeighborPts') >= MinPts then
24:                 NeighborPts' ← NeighborPts joined with
           NeighborPts'
25:             end if
26:         end if
27:         if p' is not yet member of any cluster then
28:             add p' to cluster c
29:         end if
30:     end for
31: end function
32: procedure REGIONQUERY(p, eps)
33:     return all points within
        p's eps-neighborhood (including p)
34: end procedure
```

# Fig. 1A

```
1: procedure DBSCANLIGHT(D, eps, MinPts)
Input: The dataset D, the distance threshold for
       neighbourhood query eps, and minimum
       number of points required to form a cluster MinPts
2:     c ← 0
3:     for each point p in dataset D do
4:         if p is visited then
5:             continue next point
6:         end if
7:         mark p as visited
8:         NeighborPts ← regionQuery(p, eps)
9:         if sizeof(NeighborPts) < MinPts then
10:            mark p as noise
11:        else
12:            expandCluster(p, NeighborPts, c, eps, MinPts)
13:        end if
14:    end for
15: end procedure
16: function EXPANDCLUSTER(p, NeighborPts, c, eps, MinPts)
17:    closestClus ← null
18:    closestClusDist ← infinity
19:    for each point p' in NeighborPts do
20:        if p' is assigned to a cluster
           AND distance(p, p') < closestClusDist then
21:            closestClus ← p.cluster
22:            closestClusDist ← distance(p, p')
23:        end if
24:        mark p' as visited
25:    end for
26:    if closestClus == null then
27:        c ← next cluster
28:        closestClus ← c
29:    end if
30:    for each point p' in NeighborPts do
31:        if p' is not yet member of any cluster then
32:            add p' to cluster c
33:        end if
34:    end for
35: end function
36: procedure REGIONQUERY(p, eps)
37:    return all points within
           p's eps-neighborhood (including p)
38: end procedure
```

# Fig. 1B

# Fig. 2

# Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2015005015 A1

### Non-patent literature cited in the description

- Localization of LTE measurement records with missing information. **R. AVIK et al.** IEEE INFOCOM 2016, THE 35 ANNUAL IEEE INTERNATIONAL CONFERENCE ON COMPUTER COMMUNICATIONS. IEEE, 10 April 2016, 1-9

- Wi-Fi Fingerprint Based Indoor Localization without Indoor Space Measurement. **J. ZHIPING et al.** 2013 IEEE 10th INTERNATIONAL CONFERENCE ON MOBILE AD-HOC AND SENSOR SYSTEMS. IEEE, 14 October 2013, 384-392